# EUROPEAN PATENT SPECIFICATION

(11) **EP 2 813 411 B1**
(45) Date of publication and mention of the grant of the patent: **27.07.2016**
(21) Application number: 13171660.7
(22) Date of filing: 12.06.2013
(51) Int. Cl.: B62B 3/18

(54) **Roll container**
Rollbehälter
Conteneur roulant

(43) Date of publication of application: 17.12.2014
(73) Proprietor: K. Hartwall Oy AB, 01150 Söderkulla (FI)
(72) Inventor: Nyholm, Thomas, 01150 Söderkulla (FI); Järvi, Mikko, 01150 Söderkulla (FI)
(74) Representative: Seppo Laine Oy

(56) References cited:
- WO-A1-81/01820
- DE-A1- 10 130 911
- FR-A1- 2 528 784
- JP-A- 2001 039 313
- JP-Y- H0 511 159

## Description

### FIELD OF THE INVENTION

The present invention relates to logistics equipment. In particular, the invention relates to roll containers of the nesting type with a chassis and two pivoting side frame sections. More specifically, the invention relates to a roll container according to the preamble portion of claim 1.

### BACKGROUND ART

Roll containers are a popular means of moving and temporary storage of goods. Roll containers comprise a chassis, a plurality of fixed or swivel castors or both and vertical side frame sections. There is a variety of different types of roll containers, but a nesting type has achieved great popularity. Nesting roll containers may be divided into different sub-categories depending on the type of chassis used to combine the side frame sections and castors. The so called V-frame roll container features a rear frame element, wherein the side frame sections and base are attached to opposing ends of the rear frame element in a pivoting manner. In order to achieve a nesting condition, it is necessary to raise the base and pivot the side frame sections outwards to form a V-shape. Two fixed castors are attached to the rear of the container, namely to the rear frame element, whereby two swivel castors are attached to the front of the container, namely to the front ends of the side frame sections. Roll containers of the nesting type are described in greater detail in the European standard for roll containers EN12674-1, which uses somewhat different terminology to refer to the chassis of the roll container. The standard does not identify the rear frame element of a V-frame roll container as a chassis.

Another type of a nesting roll is the so called A-frame roll container, which features a chassis having a shape resembling the letter 'A' in plan view. Nesting is achieved by folding both of the side frame sections against the chassis after the base has been lifted. Two fixed castors are attached adjacent to the pivoting points of the side frame sections and two swivel castors are attached the front of the container, namely to the front ends of the side frame sections.

As opposed to nesting roll containers with two pivoting side frame sections, nesting roll containers with only one or no pivoting side frame sections are known. An example of such a type of roll containers is the so called Z-frame or N-frame type, which features a chassis having a shape of that of the letter Z. In its simplest two sided design it is only necessary to raise the base (to one side) to allow units to be nested. There is also known a modification of the Z-frame design, wherein one of the side frame section may be pivoted.

A problem associated with nesting roll containers is two-fold. On the one hand, traditional roll containers are unergonomic in the sense that the base shall be pivoted between the load-carrying and nesting orientation by reaching down and manipulating latches etc. by hand. This issue has been recognized, whereby bases provided with special suspended locking latches have been proposed. Albeit quicker to use than traditional latches, the special suspended latches still require reaching down, which does not solve the ergonomics problem and which construction is complicated and expensive.

While being volymetrically efficient, traditional roll containers of the nesting type are on the other hand known to be unsuitable for automated handling due to freely the freely pivoting base of the container. Therefore instead of nesting roll containers, automated conveyor systems typically convey either pallets or special roll containers, which feature a plastic base which is directly and releasably fixed to two side frame sections. This so called demountable roll container is especially popular in German speaking countries, in which roll containers are transported within production and logistics sites by means of chain conveyors, which engage with the bottom surface of the plastic base and support the weight of the container from beneath. Unlike nesting roll containers, demountable roll containers cannot be arranged in a nesting configuration for storage of empty containers. Instead, demountable roll containers are disassembled by detaching the plastic base from the side frame sections for storage. Alternatively empty demountable roll containers are stored stacked on top of each other in an inverted orientation.

Accordingly, the problem related to demountable roll containers is the storage of empty containers on top each other because the storage is far less efficient in terms of space required. By nesting, the space required for storing empty containers is reduced by 75 per cent compared to storing roll containers separately, while demountable roll containers only manage a 50 per cent reduction. Lifting empty containers is also quite laborous and may be tiresome for logistics personnel. If, on the other hand, the roll container is demounted, the disassemble takes about 45 seconds, which is longer than preparing a nesting roll container into the nesting configuration. In conclusion, demountable roll containers are suitable for automated item handling but cumbersome when stored empty, while nesting roll containers are vice versa.

JP 2001039313 A and JP H0511159 Y disclose a roll container according to the preamble of claim 1 with a liftable base having a hand-operated mechanism mounted to the bottom surface of the base.

### AIM OF THE INVENTION

It is therefore an aim of the present invention to provide a simple roll container without complicated suspended latches that would combine the empty storage properties of nesting roll containers and the suitability for automated item handling of demountable roll containers.

### SUMMARY

The aim of the present invention is achieved with aid of a novel a roll container, which has a chassis and two side frame sections distanced from each other to create the width of the roll container. The side frame sections are hinged to the chassis for pivoting the side frame sections between an operational configuration, wherein the side frame sections are parallel to each other, and a nesting configuration, wherein the side frame sections are tilted in respect to each other. The roll container has castor assemblies, which are attached to the chassis or side frame section.

The roll container also has a base, which is pivotably attached from one peripheral edge to the chassis or side frame section. The base is configured to be manipulated between a load carrying orientation so as to functionally connect bottom ends of the opposing side frame sections for providing a floor in operational configuration of the roll container and an upright folded orientation for nesting configuration of the roll container.

The roll container further includes foot-operated locking means, which is provided to another peripheral edge of the base and configured to engage releasably with a castor assembly or to the bottom end of either or both of the side frame sections or to the chassis. The locking means includes a pin, which is affixed to the base. The locking means also includes a crossbar, which is pivotably arranged to the second peripheral edge of the base and configured to rotate about the pin. The locking means further includes a latch, which is distanced from the pin by the crossbar and ex-tends there from and towards the pin such that the locking means is configured to be manipulated between a locking and a released configuration. In the locking configuration the latch is engaged with the castor assembly, side frame section or chassis. In the released configuration the latch is detached from the castor assembly, side frame section or chassis, whereby the latch may only be released from the castor assembly upon rotation of the crossbar about the pin.

More specifically, the roll container according to the present invention is characterized by the characterizing portion of claim 1.

Considerable benefits are gained with aid of the present invention. By virtue of the novel foot-operated locking means provided to the base, the base is locked into the horizontal load-carrying orientation, whereby the roll container may be supported from beneath and conveyed with a conveyor which engages with the bottom surface of the base. Furthermore, the base may be lifted by kicking, which is very ergonomic compared to reaching down and lifting by hand. The novel foot-operated locking means also enables the user to keep both hands on the side frame sections for manipulating the roll container between the operational and nesting configuration further improving the ergonomics of the container.

Compared to demountable roll containers, the present invention not only greatly improves empty storage efficiency but also reduces the amount of time required to arrange the container from operational configuration into a nesting, i.e. storage, configuration. Specifically, this time is reduced from about 45 seconds down to just 8 seconds, thus further improving empty storage properties.

### BRIEF DESCRIPTION OF DRAWINGS

In the following, exemplary embodiments of the invention are described in greater detail with reference to the accompanying drawings in which:
Fig. 1 presents an isometric view of a two-sided roll container having a base according to one embodiment in a load-carrying configuration,
Fig. 2 presents the roll container of Fig. 1 in a nesting configuration, wherein the base is in an intermediate position between the horizontal load-carrying position and upright folded position,
Fig. 3 presents the roll container of Fig. 1 in a nesting configuration, wherein the base is in an upright position,
Fig. 4 presents an isometric view of a plurality of roll containers of Fig. 3 in a nesting configuration,
Fig. 5 presents the roll container of Fig. 1 without the base,
Fig. 6 presents a detailed view of area A of fig. 5,
Fig. 7 presents a detailed view of area F of Fig. 5,
Fig. 8 presents a detailed side elevation view of the connection between the base and the castor assembly of the roll container of Fig. 1 in a secured state,
Fig. 9 presents a detailed side elevation view of the connection between the base and the castor assembly of the roll container of Fig. 1 in a released state,
Fig. 10 presents a detailed side elevation view of the connection between the base and the rear frame element of the roll container of Fig. 1 in a horizontal load-carrying position, and
Fig. 11 presents a detailed side elevation view of the connection between the base and the rear frame element of the roll container of Fig. 1 in a upright folded position.

### DETAILED DESCRIPTION OF PREFERRED EMBODIMENTS

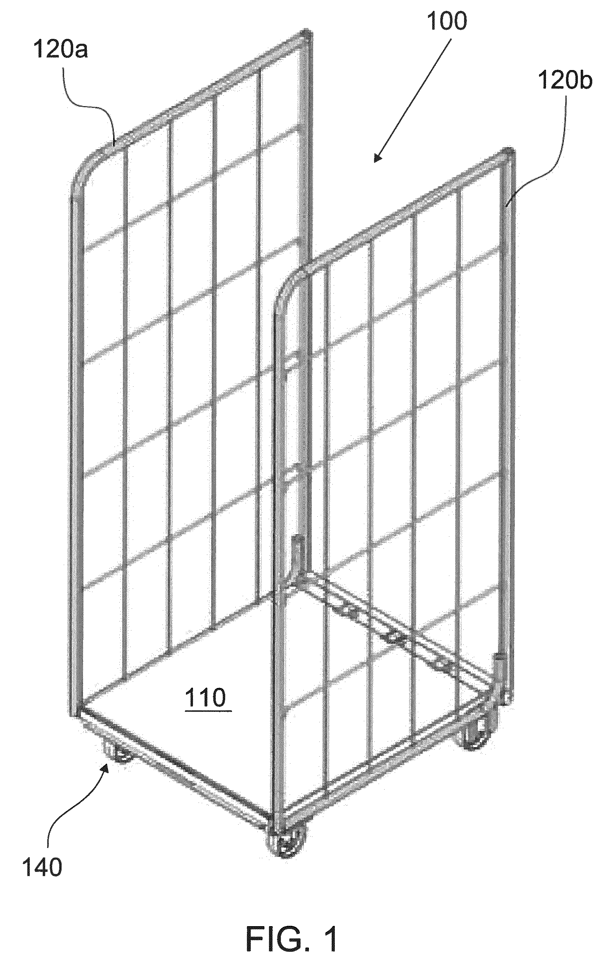

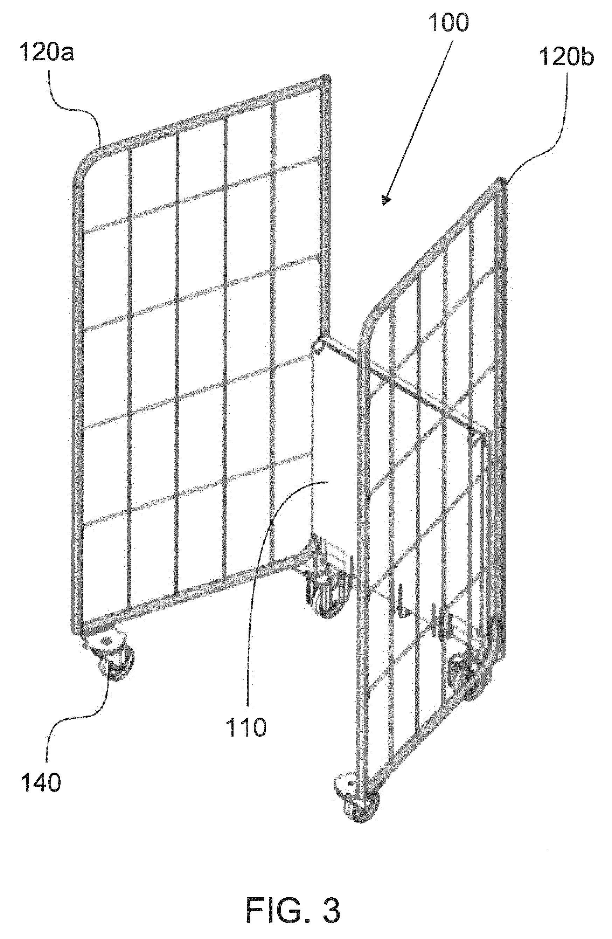

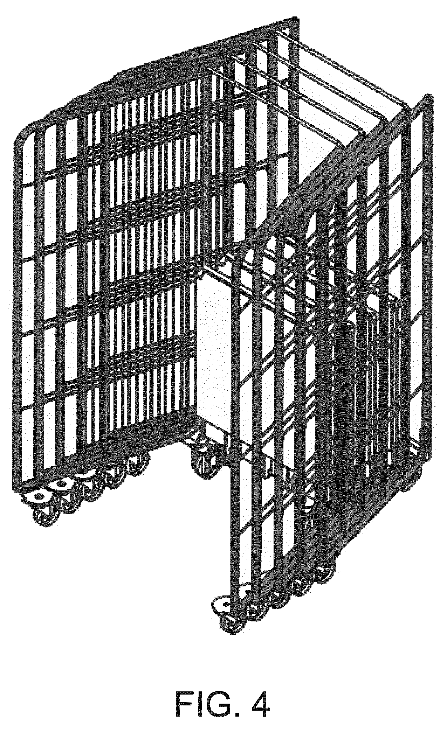

The roll container 100 according to one embodiment includes a chassis 130 in the form of a rear frame element. Two side frame sections 120a, 120b are pivotably arranged at opposing ends of the rear frame element 130, which is known *per se.* The length of the rear frame element 130 dictates the distance between the side frame sections 12a, 120b and thus the width of the roll container 100. With aid of the hinged attachment between the side frame sections 120a, 120b and the rear frame element enables the side frame sections 120a, 120b to be pivoted between an operational configuration and nesting configuration. In the operational configuration as shown in Fig. 1, the side frame sections 120a, 120b are parallel to each other. In the nesting configuration in Fig. 3, the side frame sections 120a, 120b are tilted in respect to each other about a vertical axis and in respect to the rear frame element 130. The illustrated example presents a V-frame roll container, wherein the front ends of the side frame sections 120a, 120b are tilted towards each other, while the rear ends act as hinge points. Fig. 4 shows four such roll containers arranged back to back in the nesting configuration.

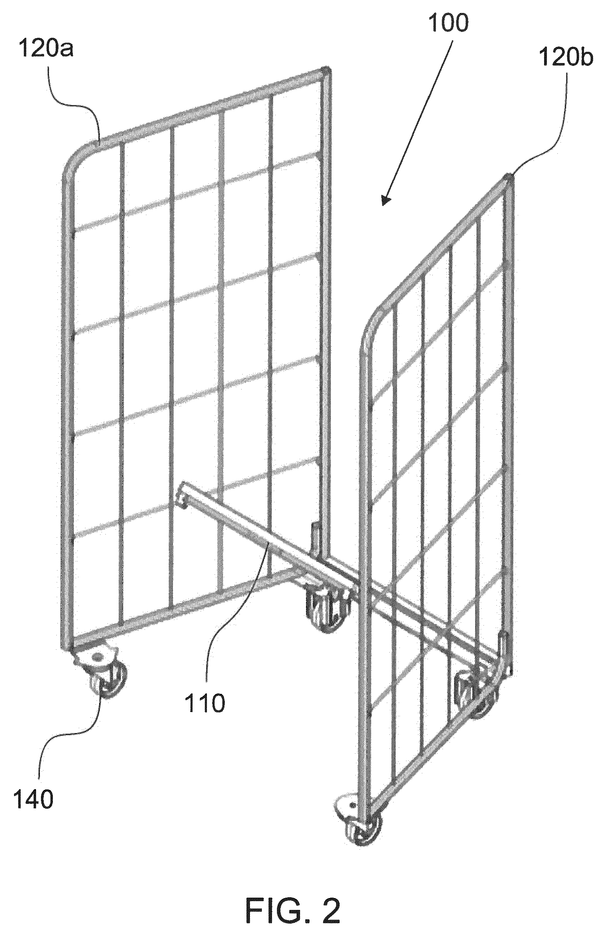

As can also be seen from Figs. 1 to 3, the roll container 100 includes a quadrilateral base 100 having has four peripheral edges that are consecutively orthogonal to each other. The base 110 of the roll container 100 is pivoted from its rear edge to the rear frame section 130. The base 110 may therefore be manipulated between a horizontal load carrying orientation and an upright folded orientation. In the horizontal load carrying orientation shown in Fig. 1, the base 110 functionally connects the bottom ends of the opposing side frame sections 120a, 120b for providing a floor in operational configuration of the roll container 100. By functionally connecting the side frame sections 120a, 120b it is meant that the base 110 need not be tightly attached to the side frame sections as long as the base 110 is able to provide a floor from preventing the items in the roll container 100 from dropping off through the bottom side. The horizontal load carrying orientation is used in the operational configuration of the roll container 100. In the upright folded orientation shown in Fig. 3, the base 110 is pivoted to a substantially vertical angle to the rear of the roll container 100 between the opposing side frame sections 120a, 120b. The upright folded orientation is therefore used for the nesting configuration of the roll container 100.

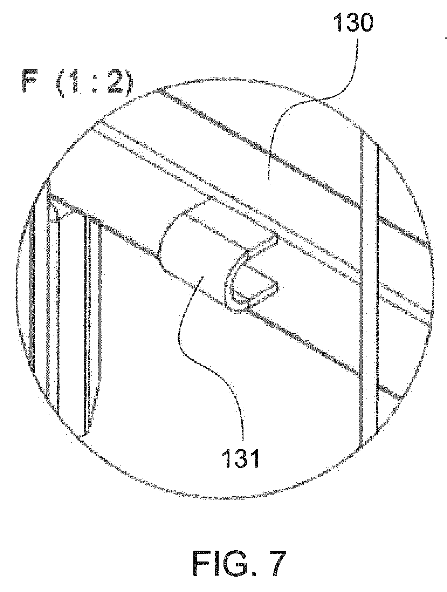

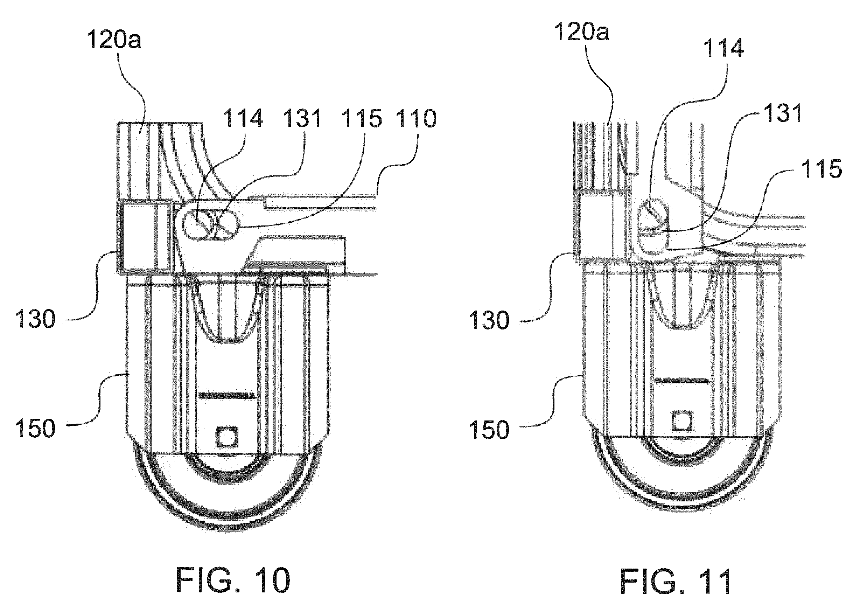

Turning now to Figs. 7, 10 and 11, which show the pivoting mechanism of the base 110 in greater detail. Firstly, the chassis - i.e. the rear frame element 130 - of the roll container 100 is provided with aligned axle supports 131, which support and axle 114 running between the axle supports 131. A corresponding slot 131 is provided to the rear edge of the base 110 so as to rotate the base in respect to the rear frame element 130 about the axle 114. The slot 131 is oblong such that the base 110 may be rotated about the axle 114 and dropped onto the axle 114 for securing the base 110 to the upright orientation. Respectively for manipulating the base 110 into the horizontal load-carrying orientation, the base 110 must first be lifted and thereafter rotated about the axle 114 for lowering the front edge of the base 110 towards the front swivel castor assemblies 140. The rear end of the base 110 is therefore shaped so as to engage with the rear frame element 130 for maintaining the base 110 in the upright orientation and for assisting the rotation motion with aid of a chamfered bottom rear corner.

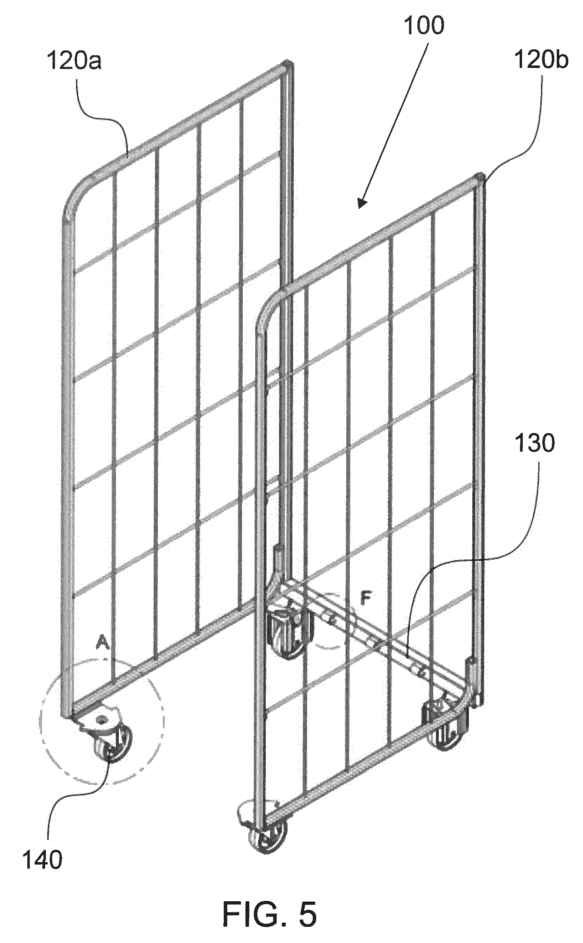

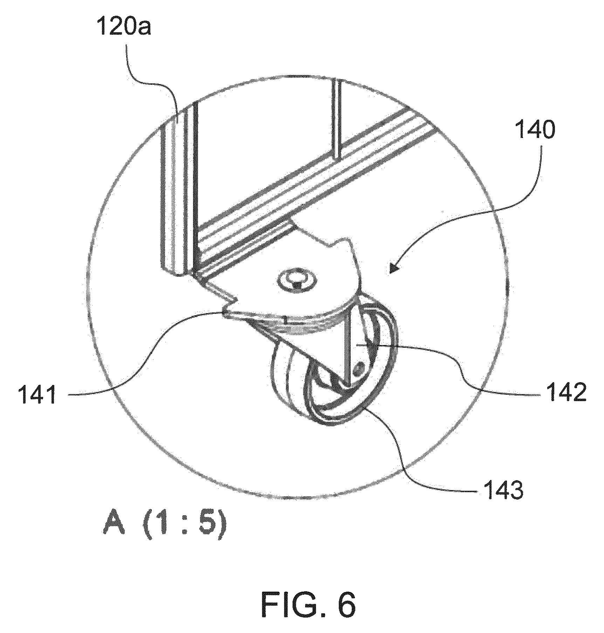

As best seen in Figs. 5 and 6, the roll container 100 also includes two fixed castor assemblies 150, which are provided to the rear frame element 130, and two swivel castor assemblies 140, which are provided to the front end of the roll container 100. The castor assembly 140 includes a wheel plate 141, which is attached to the underside of the side frame section 120a, 120b in case of a swivel castor, or to the underside of the rear frame element 130 in case of a fixed castor. The castor assembly also includes a fork 142 which is affixed to the wheel plate 141 and a wheel 143 which is rotatably connected to the fork 142. In a swivel castor assembly 140, the fork 142 is rotatably connected to the wheel plate 141, whereas the fork of the fixed castor assembly 150 is angularly fixed in relation to its vertical axis.

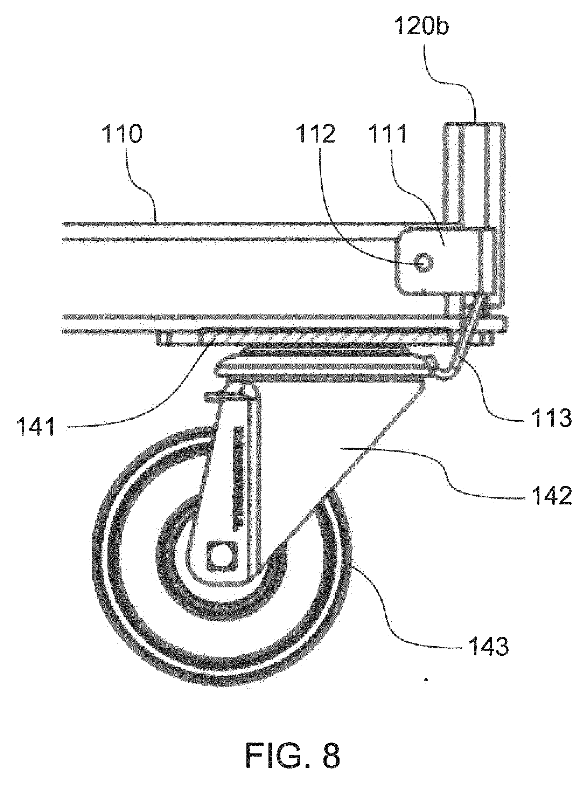

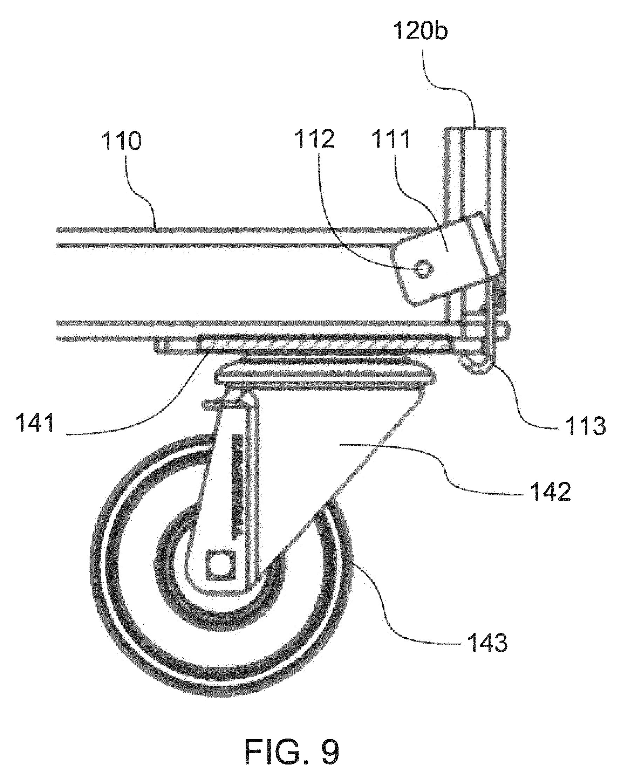

The front edge of the base 110 is provided with a foot-operated locking means. The locking means is constructed to engage releasably either with a castor assembly 140, as shown in the Figures, or to the bottom end of either or both of the side frame sections 120a, 120b (not shown). Alternatively, the locking means is constructed to engage releasably to the chassis in an embodiment featuring an A-frame chassis, for example (not shown). The locking means includes a crossbar 111, which is pivotably arranged to front edge of the base 110, i.e. the edge opposing the rear edge, from which the base 110 is pivoted to the chassis, i.e. rear frame element 130 (Figs. 1 to 3). The locking means further includes a latch 113, which extends from the crossbar 111 as us shown in detail in Figs. 8 and 9. The crossbar 111 is arranged around a pin 112, which is affixed to the base 110, whereby the crossbar 111 may rotate about an axis of revolution created by the pin 112. Connected to the crossbar 111 is a latch 113. The latch 113 is distanced from the pin 112 by the crossbar 111, whereby the latch 113 extends from the crossbar 111 in an angled manner towards the pin 112. By rotating the crossbar 111, the latch 113 may be rotated around the pin 112. In a locking configuration the latch 113 engages with the castor assembly 140 (Fig. 8) or to the bottom end of either or both of the side frame sections 120a, 120b (not shown). Alternatively, the latch 113 engages with the distanced ends of the chassis in a A-frame chassis embodiment (not shown). In a released configuration, the latch 113 is detached from the castor assembly 140, side frame section 120a, 120b (not shown) or chassis (not shown). Consequently, the locking means is constructed to be manipulated between a locking configuration by rotating the crossbar 111 around the pin 112.

The roll container 100 is manipulated between the operation and nesting configuration by first rotating the crossbar 111 by foot around the pin 112. The maneuver resembles a normal upward kicking motion. As the crossbar 111 rotates, the latch 113 is released from the wheel plate 114 of the swivel castor assembly 140 at the front of the roll container 110. Due to the shape of the locking means, the latch 113 may only be released from the castor assembly 140 upon rotation of the crossbar 111 about the pin 112. During said kicking motion and after the latch 113 has detached from the wheel plate 114, the base 110 is pivoted about the axle 114 and dropped onto it, wherein the base 110 is in the upright folding position. The side frame sections 120a, 120b may be pivoted simultaneously or subsequently into the nesting position because the user's hands are free to grab the profiles of the side frame sections 120a, 120b. Manipulation into the operational configuration is performed in reverse order by first lifting the base 110 by hand and bringing it downward about the axle 114. As soon as the base is horizontal, the locking means is turned into the locking configuration by rotating the crossbar 111 around the pin 112 until the latch 113 engages with the wheel plate 141.

The base 110 is preferably made of deformable material, such as a polymer based material, e.g. plastic. According to this embodiment, the base 110 may be made by molding, whereby the bottom surface of the base 110 may easily be shaped to engage with a conveyor, e.g. the grabbers or links of a chain conveyor.

In an A-frame application (not shown), the fixed castor assemblies are provided to the distanced ends of the chassis and the swivel castor assemblies are provided to those ends of the side frame sections that oppose the fixed castor assemblies and that are near the angle end of the chassis. In a nesting configuration, the side frame sections are tilted towards each other, wherein the side frame sections are parallel to the flanks of the A-frame chassis. Also, the base is in an upright vertical orientation adjacent and parallel to either side frame section, wherein the base is hinged to the bottom end of that side frame section. For arranging the roll container into the operational configuration, the side frame sections are pivoted in respect to the chassis to be parallel to each other, where after the base is lowered into the load carrying horizontal orientation so as to connect the bottom ends of the opposing side frame sections thus forming a floor. The base is then locked to the bottom ends of the side frame sections or to the chassis by rotating the crossbar, whereby the latch rotates around the pin thus engaging with the bottom ends of the side frame sections or to the chassis, namely with the distanced ends of the A-frame chassis. For arranging the roll container back into the nesting configuration, the locking means is released in a reversed order. Thereafter the base is pivoted from the horizontal orientation into the upright folded configuration about the hinge point provided to the bottom end of the side frame section. The base maintains in the upright orientation by means of the slot arrangement as disclosed above or by means of a hook or similar arrangement for securing the bottom to the side frame section.

**TABLE 1: LIST OF REFERENCE NUMBERS.**

| **Number** | **Part** |
|---|---|
| 100 | roll container |
| 110 | base |
| 111 | crossbar |
| 112 | pin |
| 113 | latch |
| 114 | axle |
| 115 | slot |
| 120a, 120b | side frame section |
| 130 | rear frame element |
| 131 | axle support |
| 140 | front swivel castor assembly |
| 141 | wheel plate |
| 142 | fork |
| 143 | wheel |
| 150 | rear fixed castor assembly |

## Claims

1. Roll container (100) of the nesting type and comprising:
- chassis (130),
- two side frame sections (120a, 120b) distanced from each other to create the width of the roll container, which side frame sections (120a, 120b) are hinged to the chassis (130) for pivoting the side frame sections (120a, 120b) between:
o an operational configuration, wherein the side frame sections (120a, 120b) are parallel to each other, and
o a nesting configuration, wherein the side frame sections (120a, 120b) are tilted in respect to each other,
- a castor assemblies (140, 150) attached to the chassis (130) or side frame section (120a, 120b),
- a base (110) having peripheral edges, which base (110) is pivotably attached from a first peripheral edge to the chassis (130) or side frame section (120a, 120b), which base (110) is configured to be manipulated between:
o a load carrying orientation so as to functionally connect bottom ends of the opposing side frame sections (120a, 120b) for providing a floor in operational configuration of the roll container (100), and
o an upright folded orientation for nesting configuration of the roll container (100), and
- foot-operated locking means (111, 112, 113), which is:
o provided to a second peripheral edge of the base (110) and
o configured to engage releasably with a castor assembly (140) or to the bottom end of either or both of the side frame sections (120a, 120b) or to the chassis,
**characterized in that** the locking means (111, 112, 113) comprises:
- a pin (112), which is affixed to the base (110),
- a crossbar (111), which is pivotably arranged to the second peripheral edge of the base (110) and configured to rotate about the pin (112), and
- a latch (113) being distanced from the pin (112) by the crossbar (111) and extending there from and towards the pin (112) such that the locking means is configured to be manipulated between:
o a locking configuration, wherein the latch (113) is engaged with the castor assembly (140), side frame section (120a, 120b) or chassis, and
o a released configuration, wherein the latch (113) is detached from the castor assembly (140), side frame section (120a, 120b) or chassis, whereby the latch (113) may only be released from the castor assembly (140) upon rotation of the crossbar (111) about the pin (112).

2. Roll container (100) according to claim 1, wherein the side frame sections (120a, 120b) are tilted in respect to each other about a vertical axis in the nesting configuration of the roll container (100).

3. Roll container (100) according to claim 1 or 2, wherein the chassis (130) is a rear frame element, wherein the side frame sections (120a, 120b) are pivotably arranged at opposing ends of the rear frame element (130).

4. Roll container (100) according to any of the preceding claims, wherein the peripheral edges of the base (110) are consecutively orthogonal to each other.

5. Roll container (100) according to any of the preceding claims, wherein the second peripheral edge of the base (110) opposes the first one.

6. Roll container (100) according to claim 1, wherein the castor assembly (140) comprises
- a wheel plate (141), which is attached to the underside of the side frame section (120a, 120b),
- fork (142) which is affixed to the wheel plate (141), and
- a wheel (143) which is rotatably connected to the fork (142), and wherein
the latch (113) is configured to be engaged with the wheel plate (141) of the castor assembly (140).

7. Roll container (100) according to any of the preceding claims, wherein an axle (114) is provided to the chassis (130), wherein the base (110) comprises a corresponding slot (131) at the first peripheral edge, from which slot (131) the base (110) is configured to rotate in respect to the chassis (130) about said axle (114).

8. Roll container (100) according to claim 7, wherein the slot (131) is oblong such that the base (110) may be rotated about the axle (114) and dropped onto the axle (114) for securing the base (110) to the upright orientation.

9. Roll container (100) according to any of the preceding claims, wherein the latch (113) is configured to grab the wheel plate (141) when the base (110) is rotated about its axle (114) and to release the wheel plate (141) when the crossbar (111) is rotated about the pin (112).

10. Roll container (100) according to any of the preceding claims, wherein the roll container (100) comprises:
- two fixed castor assemblies (150) provided to the chassis (130) at the rear of the roll container (100) and
- two swivel castor assemblies (140) provided to the opposing front end of the roll container (100),
wherein the locking means (111, 112, 113) is configured to engage releasably with a castor assembly (140) at the front end of the roll container (100).

11. Roll container (100) according to any of the preceding claims, wherein the base (110) is made of material comprising plastic.

12. Roll container (100) according to claim 11, wherein the base (110) comprises a bottom surface, which is shaped to engage with a conveyor.

## Patentansprüche

1. Rollbehälter (100) von der Verschachtelungsart und aufweisend:
- ein Chassis (130),
- zwei Seitenrahmenteile (120a, 120b), die voneinander distanziert sind, um die Breite des Rollbehälters zu schaffen, welche Seitenrahmenteile (120a, 120b) drehbar an dem Chassis (130) angebracht sind zum Schwenken der Seitenrahmenteile (120a, 120b) zwischen:
- einer Betriebskonfiguration, wobei die Seitenrahmenteile (120a, 120b) parallel zueinander sind, und
- einer Verschachtelungskonfiguration, wobei die Seitenrahmenteile (120a, 120b) in Bezug aufeinander geneigt sind,
- einer Rollenanordnung (140, 150), die an dem Chassis (130) oder Seitenrahmenteil (120a, 120b) befestigt ist,
- eine Basis (110) mit peripheren Kanten, welche Basis (110) von einer ersten peripheren Kante her schwenkbar an dem Chassis (130) oder Seitenrahmenteil (120a, 120b) befestigt ist, welche Basis (110) konfiguriert ist, um betätigt zu werden zwischen:
- einer Lasttrageorientierung, um untere Enden von den gegenüberliegenden Seitenrahmenteilen (120a, 120b) funktional zu verbinden zum Bereitstellen eines Bodens in der Betriebskonfiguration des Rollbehälters (100), und
- einer senkrecht gefalteten Orientierung für die Verschachtelungskonfiguration von dem Rollbehälter (100), und
- ein fußbetriebenes Verschlussmittel (111, 112, 113), das:
- an einer zweiten peripheren Kante der Basis (110) bereitgestellt ist und
- konfiguriert ist, um lösbar in Eingriff zu kommen mit einer Rollenanordnung (140) oder an dem unteren Ende von einem oder beiden der Seitenrahmenteile (120a, 120b) oder an dem Chassis,
**dadurch gekennzeichnet, dass** das Verschlussmittel (111, 112, 113) aufweist:
- einen Stift (112), der an der Basis (110) befestigt ist,
- einen Querbalken (111), die schwenkbar an der zweiten peripheren Kante der Basis (110) angeordnet ist und konfiguriert ist zum Drehen um den Stift (112) herum, und
- einen Riegel (113), der von dem Stift (112) durch den Querbalken (111) distanziert ist und sich von dort und in Richtung des Stiftes (112) erstreckt, so dass das Verschlussmittel konfiguriert ist, um betätigt zu werden zwischen:
- einer Verschlusskonfiguration, wobei der Riegel (113) mit der Rollenanordnung (140), Seitenrahmenteil (120a, 120b) oder Chassis in Eingriff steht, und
- einer gelösten Konfiguration, wobei der Riegel (113) von der Rollenanordnung (140), Seitenrahmenteil (120a, 120b) oder Chassis getrennt ist, wobei der Riegel (113) nur bei einer Drehung des Querbalkens (111) um den Stift (112) herum von der Rollenanordnung (140) gelöst werden kann.

2. Rollbehälter (100) gemäß Anspruch 1, wobei die Seitenrahmenteile (120a, 120b) in der Verschachtelungskonfiguration des Rollbehälters (100) in Bezug aufeinander um eine vertikale Achse geneigt sind.

3. Rollbehälter (100) gemäß Anspruch 1 oder 2, wobei das Chassis (130) ein hinteres Rahmenelement ist, wobei die Seitenrahmenteile (120a, 120b) schwenkbar an gegenüberliegenden Enden des hinteren Rahmenelementes (130) angeordnet sind.

4. Rollbehälter (100) gemäß einem der vorangegangenen Ansprüche, wobei die peripheren Kanten der Basis (110) aufeinander senkrecht zueinander sind.

5. Rollbehälter (100) gemäß einem der vorangegangenen Ansprüche, wobei die zweite periphere Kante der Basis (110) der ersten entgegensteht.

6. Rollbehälter (100) gemäß Anspruch 1, wobei die Rollenanordnung (140) aufweist:
- eine Radplatte (141), die an der Unterseite des Seitenrahmenteils (120a, 120b) befestigt ist,
- eine Gabel (142), die an der Radplatte (141) befestigt ist, und
- ein Rad (143), das drehbar mit der Gabel (142) verbunden ist und
wobei der Riegel (113) konfiguriert ist, um mit der Radplatte (141) der Rollenanordnung (140) in Eingriff zu kommen.

7. Rollbehälter (100) gemäß einem der vorangegangenen Ansprüche, wobei eine Achse (114) an dem Chassis (130) bereitgestellt ist, wobei die Basis (110) einen entsprechenden Schlitz (131) an der ersten der ersten peripheren Kante aufweist, von welchem Schlitz (131) die Basis (110) konfiguriert ist zum Drehen in Bezug auf das Chassis (130) um die besagte Achse (114).

8. Rollbehälter (100) gemäß Anspruch 7, wobei der Schlitz (131) länglich ist, so dass die Basis (110) um die Achse (114) herum gedreht und auf der Achse (114) abgesetzt werden kann, um die Basis (110) in der senkrechten Orientierung zu sichern.

9. Rollbehälter (100) gemäß einem der vorangegangenen Ansprüche, wobei der Riegel (113) konfiguriert ist zum Erfassen der Radplatte (141), wenn die Basis (110) um ihre die Achse (114) gedreht wird, und zum Lösen der Radplatte (141), wenn der Querbalken (111) um den Stift (112) gedreht wird.

10. Rollbehälter (100) gemäß einem der vorangegangenen Ansprüche, wobei der Rollbehälter (100) aufweist:
- zwei befestigte Rollenanordnungen (150), die an dem Chassis (130) an dem hinteren Teil des Rollbehälters (100) bereitgestellt sind, und
- zwei Lenkrollenanordnungen (140), die an dem gegenüberliegenden vorderen Ende des Rollbehälters (100) bereitgestellt sind, wobei das Verschlussmittel (111, 112, 113) konfiguriert ist, um mit einer Rollenanordnung (140) an dem vorderen Ende des Rollbehälters (100) lösbar in Eingriff zu kommen.

11. Rollbehälter (100) gemäß einem der vorangegangenen Ansprüche, wobei die Basis (110) aus einem Werkstoff hergestellt ist, der Kunststoff aufweist.

12. Rollbehälter (100) gemäß Anspruch 11, wobei die Basis (110) eine untere Oberfläche aufweist, die geformt ist, um mit einem Förderer in Eingriff zu kommen.

## Revendications

1. Conteneur roulant (100) du type à emboîtement et comprenant .
- un châssis (130),
- deux sections formant cadres latéraux (120a, 120b) espacées l'une de l'autre pour créer la largeur du conteneur roulant, lesquelles sections formant cadres latéraux (120a, 120b) sont articulées au châssis (130) pour faire pivoter les sections formant cadres latéraux (120a, 120b) enture :
• une configuration opérationnelle, dans laquelle les sections formant cadres latéraux (120a, 120b) sont parallèles l'une à l'autre, et
• une configuration à emboîtement, dans laquelle les sections formant cadres latéraux (120a, 120b) sont inclinées l'une par rapport à l'autre,
- des ensembles de roulettes (140, 150) attachés au châssis (130) ou aux sections formant cadres latéraux (120a, 120b),
- une base (110) ayant des bords de périphérique, laquelle base (110) est attachée de manière pivotante à partir d'un premier bord périphérique au châssis (130) ou aux sections formant cadres latéraux (120a, 120b), laquelle base (110) est configurée pour être manipulée entre :
• une orientation de transport de charge de façon à relier de manière fonctionnelle les extrémités inférieures des sections formant cadres latéraux opposées (120a, 120b) pour définir un plancher dans la configuration opérationnelle du conteneur roulant (100), et
• une orientation pliée verticale pour la configuration à emboîtement du conteneur roulant (100), et
- un moyen de verrouillage mis en oeuvre au pied (111, 112, 113), qui est :
• disposé sur un second bord périphérique de la base (110) et
• configuré pour mettre en prise de façon amovible un ensemble de roulettes (140) ou sur l'extrémité inférieure ou l'une ou l'autre ou les deux des sections formant cadres latéraux (120a, 120b) ou sur le châssis, **caractérisé en ce que** le moyen de verrouillage (111, 112, 113) comprend :
- un ergot (112), qui est fixé à la base (110),
- une barre transversale (111), qui est agencée de manière pivotante sur le second bord périphérique de la base (110) et configurée pour tourner autour de l'ergot (112), et
- un verrou (113) espacé de l'ergot (112) par la barre transversale (111) et s'étendant à partir de là et vers l'ergot (112) de sorte que le moyen de verrouillage est configuré pour être manipulé entre :
• une configuration de verrouillage, dans laquelle le verrou (113) est en prise avec l'ensemble de roulettes (140), les sections formant cadres latéraux (120a, 120b) ou le châssis, et
• une configuration libérée, dans laquelle le verrou (113) est détaché de l'ensemble de roulettes (140), les sections formant cadres latéraux (120a, 120b) ou le châssis, de sorte que le verrou (113) peut seulement être libéré de l'ensemble de roulettes (140) lors de la rotation de la barre transversale (111) autour de l'ergot (112).

2. Conteneur roulant (100) selon la revendication 1, dans lequel les sections formant cadres latéraux (120a, 120b) sont inclinées l'un par rapport à l'autre autour d'un axe vertical dans la configuration à emboîtement du conteneur roulant (100).

3. Conteneur roulant (100) selon la revendication 1 ou 2, dans lequel le châssis (130) est un élément de cadre arrière, dans lequel les sections formant cadres latéraux (120a, 120b) sont agencées de manière pivotante au niveau d'extrémités opposées de l'élément de cadre arrière (130).

4. Conteneur roulant (100) selon n'importe laquelle des revendications précédentes, dans lequel les bords périphériques de la base (110) sont consécutivement orthogonaux l'un à l'autre.

5. Conteneur roulant (100) selon n'importe laquelle des revendications précédentes, dans lequel le second bord périphérique de la base (110) s'oppose au premier.

6. Conteneur roulant (100) selon la revendication 1, dans lequel l'ensemble de roulettes (140) comprend
- une plaque de roue (141), qui est attachée au dessous des sections formant cadres latéraux (120a, 120b),
- une fourche (142) qui est fixée à la plaque de roue (141), et
- une roue (143) qui est reliée en rotation à la fourche (142), et dans lequel le verrou (113) est configuré pour être en prise avec la plaque de roue (141) de l'ensemble de roulettes (140).

7. Conteneur roulant (100) selon n'importe laquelle des revendications précédentes, dans lequel un axe (114) est prévu sur le châssis (130), dans lequel la base (110) comprend une fente correspondante (131) au niveau du premier bord périphérique, fente (131) à partir de laquelle la base (110) est configurée pour tourner par rapport au châssis (130) autour dudit axe (114).

8. Conteneur roulant (100) selon la revendication 7, dans lequel la fente (131) est oblongue de sorte que la base (110) peut être tournée autour de l'axe (114) et baissée sur l'axe (114) pour fixer la base (110) sur l'orientation verticale.

9. Conteneur roulant (100) selon n'importe laquelle des revendications précédentes, dans lequel le verrou (113) est configuré pour saisir la plaque de roue (141) lorsque la base (110) est tournée autour de son l'axe (114) et pour libérer la plaque de roue (141) lorsque la barre transversale (111) est tournée autour de l'ergot (112).

10. Conteneur roulant (100) selon n'importe laquelle des revendications précédentes, dans lequel le conteneur roulant (100) comprend :
- deux ensembles de roulettes fixes (150) disposés sur le châssis (130) à l'arrière du conteneur roulant (100), et
- deux ensembles de roulettes pivotantes (140) disposées sur l'extrémité avant opposée du conteneur roulant (100),
dans lequel le moyen de verrouillage (111, 112, 113) est configuré pour mettre en prise de façon amovible un ensemble de roulettes (140) au niveau de l'extrémité avant du conteneur roulant (100).

11. Conteneur roulant (100) selon n'importe laquelle des revendications précédentes, dans lequel la base (110) est faite de matière comprenant du plastique.

12. Conteneur roulant (100) selon la revendication 11, dans lequel la base (110) comprend une surface inférieure, qui est mise en forme pour mettre en prise un convoyeur.
